(19) Europäisches Patentamt
European Patent Office
Office européen des brevets

(11) Publication number: 0 339 896 A2

# (12) EUROPEAN PATENT APPLICATION

(21) Application number: 89304032.9

(51) Int. Cl.4: H01S 3/16

(22) Date of filing: 24.04.89

(30) Priority: 25.04.88 US 185465

(43) Date of publication of application: 02.11.89 Bulletin 89/44

(84) Designated Contracting States: CH DE FR GB LI

(71) Applicant: UNION CARBIDE CORPORATION
39 Old Ridgebury Road
Danbury Connecticut 06817(US)

(72) Inventor: Kokta, Milan Ratislav
1906 S.E. 331 st Avenue
Washougal Washington 98671(US)

(74) Representative: Baverstock, Michael George Douglas et al
BOULT, WADE & TENNANT 27 Furnival Street
London, EC4A 1PQ(GB)

## (54) Laser crystals for generating infrared emission with high quality beam penetration.

(57) A laser crystal for generating a spectral emission between 1 and 3 microns when flash lamp pumped at room temperatures formed from a host material and a plurality of dopants in which chromium is included to sensitize the other dopants and improve beam penetration provided the chromium ion maximum level is no more than about 1.5 atomic percent based upon the octahedral sides of the garnet material structure.

FIG. 1

1.45% slope efficiency
.83% slope efficiency
1% Cr
2.5%Cr
Watts out
Watt in
2Hz
4Hz
8Hz
0
2
4
6
8
10
12
200
400
600
800
1000
1200
1400

EP 0 339 896 A2

# LASER CRYSTALS FOR GENERATING INFRARED EMISSION WITH HIGH QUALITY BEAM PENETRATION

This invention relates to laser crystals capable of generating infrared wavelengths in the near infrared spectrum lying between 1 to 3 microns, with high quality beam penetration, when flash lamp pumped at room temperature.

Lasers are used in the medical field in the performance of various surgical procedures. It is preferred to use laser crystals for surgical cutting instruments which generate lasing output energy in the near infrared wavelength spectrum between 1 to 3 microns. Laser energy in the near infrared emission spectrum is highly absorbed by skin tissue thereby reducing the time interval necessary to complete a surgical incision. Conversely there is less dissipation of heat into the area surrounding an incision caused by a laser having an infrared emission spectrum as compared to, for example, a $CO_2$ laser resulting in less scar tissue likely to form. It is also desirable to control beam penetration which is largely dependent upon beam quality. Laser beam quality is a measure of how uniform the beam is and how well the beam can be focused at a given focal length. A high quality laser beam is a desirable feature for controlled laser cutting.

The spectral and lasing characteristics of the laser host crystal materials such as, for example, yttrium aluminum garnet crystals (YAG) and yttrium scandium aluminum garnet (YSAG) are well known. It is also well known that such laser host crystals may be doped with various, rare earth dopants such as Holmium (Ho), Thulium (Tm), Neodymium (Nd) and Erbium (Er).

Ho:YAG has been reported to lase in the 3 micron region. This lasing is due to a transition from the $Ho^{3+}$ $5I_6$ to the $5I_7$ level. However, the lasing transition is self terminated. This limits the duration of the laser pulse and the efficiency of the lasing process. Erbium-doped YAG lasers are an efficient source of 2.94 micron wavelength radiation when using greater than 10 percent erbium in the crystal. The lasing energy level for erbium-doped YAG lasers also suffers from self termination. Quasi-continuous lasing is possible by means of cross relaxation through the use of co-dopants or multiple dopants which will reduce or eliminate the problem of self termination. Multiple dopants have been exhaustively studied in the past. However multiple or co-dopant combinations involving, for example, Holmium and Thulium cannot provide continuous lasing at room temperatures in flash lamp pumping configurations, i.e., they continuously lase only at liquid nitrogen temperatures.

It has been discovered in accordance with the present invention that the presence of chromium in the garnet structure below a concentration level of 1.5 atomic percent functions to sensitize rare earth dopants in the crystal host material to permit continuous lasing at room temperature with high quality beam penetration and high laser beam efficiency. It is also postulated in accordance with the present invention that simultaneous multiple wavelength emissions can be generated with at least one radiational band having a wavelength between 1.0 and 3.0 microns from any crystal host material containing chromium and a plurality of predetermined dopants when flash lamp pumped at room temperature. Improved laser crystal materials have also been discovered in accordance with the present invention which lase at about 2 microns with high beam quality comprised of a host material in combination with thulium and chromium or thulium, erbium and chromium or erbium and chromium. In each instance the chromium concentration should be below a maximum of 2.0 percent based on the octahedral sides of the garnet structure. A laser material which will lase at 2.94 microns has also been discovered comprised of a host material which erbium and thulium as codopants without chromium present. The latter concentration of erbium should lie between 5 and 80 atomic percent and thulium between .3 to 5 atomic percent based on the dodecahedral sides of the garnet structure.

In accordance with a broad aspect of the invention a laser adapted to be flash lamp pumped at room temperature is formed from host material doped with chromium in a preselected concentration to establish from 0.05 to 2.0 atomic percent chromium based on the octahedral sides of the garnet structure and containing additional dopants in the following combinations:

1. Neodymium alone or with an additional dopant selected from Erbium, Holmium and Thulium; and
2. Thulium in a range of between 0.1 to 15 atomic percent in combination with Holmium in a range of between 0.1 to 0.5 atomic percent based on the dodecahedral sides in the garnet structure or Thulium in combination with Erbium wherein the concentration of Thulium 0.3 to 0.5 atomic percent and that of Erbium between 5 to 80 atomic percent based on the dodecahedral sides of the garnet structure.

The foregoing dopant combinations may be used with any conventional laser host crystal material including yttrium aluminum garnet, $Y_3Al_5O_{12}$ (YAG); yttrium scandium aluminum garnet, $Y_3Sc_2Al_3O_{12}$ - (YSAG); gadolinium scandium aluminum garnet, $Gd_3Sc_2Al_3O_{12}$ (GSGG); lanthanum lutinium gallium garnet, $[La_{3-x}Lu_x]$ $[Lu_{2-y}Ga_y]$ $[Ga_3]$ $O_{12}$ wherein x is 0.2 to 0.8 and y is 0 to 1 (LLGG) and yttrium aluminate $YALO_3$.

The foregoing list of host crystals is not intended to be exhaustive but rather demonstrates the wide range of host crystals that can be employed to achieve ambient temperature lasing in the 1 to 3 micron wavelength range when flash lamp pumped.

Specific embodiments of the invention will now be described with reference to the accompanying drawings in which:

Figure 1 shows a comparison of slope efficiencies as a function of repetition rate for laser garnet structures formed from crystal materials containing different levels of chromium in a YAG host crystal;

Figures 2A and 2B show comparative photomicrographs of the laser beam quality for the same crystal material used in Figure 1.

The present invention is based on a finding that the addition of chromium to a laser crystal garnet structure in a preselected concentration of preferably between 0.05 and 1.5 atomic percent and optimally between 0.5 and about 1.0 atomic percent based on the octahedral sides of the garnet structure will enhance the beam quality, raise the efficiency of the laser beam and sensitize an energy transition into other active ions provided by the incorporation of additional primary dopants such as Holmium, Thulium and Erbium to the host crystal. The laser will continuously lase at room temperature when flash lamp pumped. If the chromium level substantially exceeds 1.5 atomic percent in the garnet structure the beam quality deteriorates and the slope efficiency is reduced.

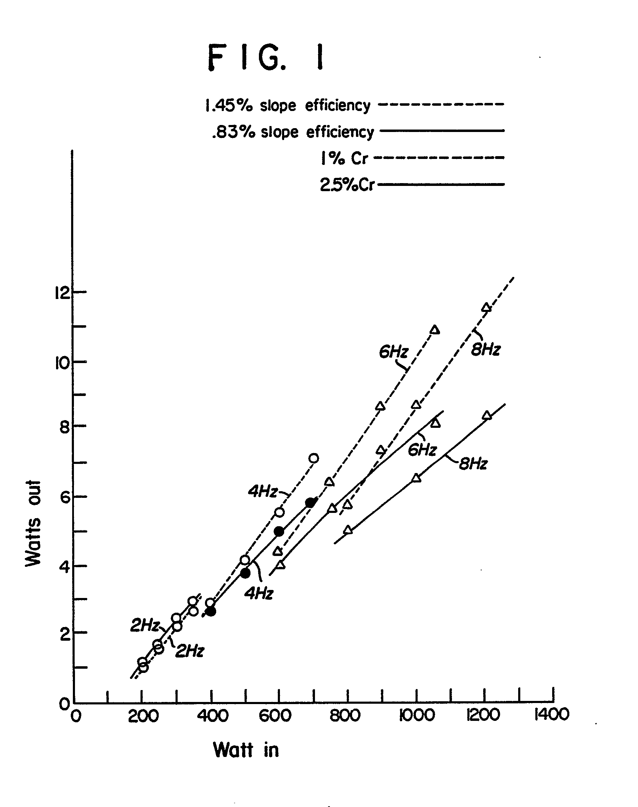

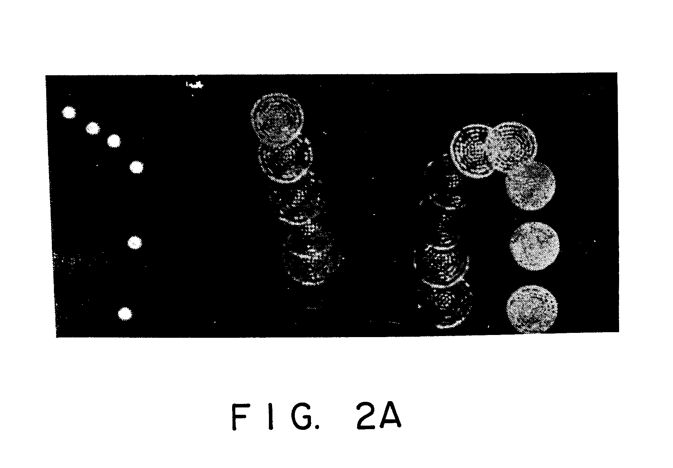

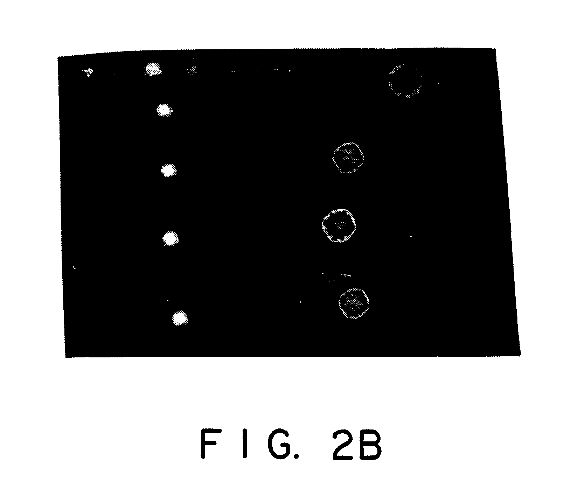

The findings of this invention is corroborated in Figures 1, 2A and 2B. The slope efficiency curves of Figure 1 were taken at the repetition rates of $2H_z$, $4H_z$, $6H_z$ and $8H_z$ respectively for both a 1% and 2.5% atomic percent chromium garnet structure YAG crystal containing the additional primary co-dopants Holmium and Thulium. Lasing was observed at 2 microns. The slope efficiency is substantially higher for the 1% doped chromium garnet structure compared to the 2.5% doped chromium garnet structure. The photomicrographs shown in Figures 2A and 2B show a substantially improved beam quality with much higher definition and uniformity in beam shape at chromium levels below about 1.5 atomic percent based on octahedral sides of the garnet structure.

It was also discovered that the combination of Thulium, Holmium and chromium will provide simultaneous dual emissions in the 1 to 3 micron wavelength region with one emission between 1.9 to 3 microns and another between 1 and 1.4 microns. The concentration of Thulium should be between 0.1 to 15 atomic percent based on dodecahedral sides of the garnet structure and 0.1 to 0.5 atomic percent of Holmium should be present.

The dopant elements are provided in amounts sufficient to effect lasing in the 1 to 3 micron range. Neodymium is frequently present in an amount of about 0.1 to 1.2 atom percent based on the dodecahedral sides in the garnet laser crystal structure. Usually, when holmium is incorporated into the lasing material it is present in an amount of about 0 to 25, preferably 1 to 25 atom percent based on the dodecahedral sides in the garnet crystal structure. Erbium is often present in an amount of about 1 to 80 atom percent based on the dodecahedral sides in the garnet crystal structure. Ytterbium, when used, is preferably a co-dopant with holmium and is present in an amount of about 1 to 25 atom percent based on the dodecahedral sides in the garnet crystal structure.

The laser crystals may be manufactured in any suitable manner. Frequently, the crystals are made from a melt containing the components desired to be incorporated into the crystal, e.g., by the well-known Czochralski technique. The amounts of the components can be readily determined from the partition coefficients. The melt can be formed from oxides of the components and preferably the raw materials, e.g., alumina, are of high purity, often less than about 1000, preferably less than about 100, parts per million by weight, of impurities such as silicon, iron, magnesium are present in order to avoid unduly deleterious effects on the laser crystal and its functioning. The components should be relatively uniformly dispersed in the melt and this dispersion can be enhanced by the use of finely divided and well admixed materials. Frequently, the melt is contained in an iridium crucible to avoid undue contamination.

The temperature of the melt will be determined by its components. For an alumina-containing melt, the temperature may be in the range of about 2050° to 2080° C. A single crystal can be pulled from the melt by, for example, the Czochralski technique. Often, the metal and the crystal are maintained in a substantially non-reactive atmosphere, e.g., nitrogen or argon, during the process. The formed crystal is cooled, usually gradually to reduce the likelihood of thermal stress, and then machined to form a crystal of the desired configuration. The crystal may be treated by polishing and coating in the normal manner to provide 3 laser crystal.

The laser crystals of this invention are optically pumped. Typical flash lamps include xenon flashlamps. The flashlamp pumping may occur in a reflective chamber. In many instances, as with other laser crystals, the effectiveness of the laser will be influenced by the flashlamp and the configuration and coating of the reflective chamber.

The following examples are provided to further illustrate the invention and are not in limitation thereof. All parts and percentages of solids are by weight and elements by atomic parts and percentages unless otherwise indicated.

## Examples

### Example 1

YAG:Tm:Ho:Cr

A crystal 1.4" in diameter 6" long was grown from a mixture of:

| | |
|---|---|
| $Y_2O_3$ = | 614.49 gms |
| $Tm_2O_2$ = | 64.95 gms |
| $Ho_2O_3$ = | 3.975 gms |
| $Cr_2O_3$ = | 2.96 gms |
| $Al_2O_3$ = | 494.61 gms |

with a composition 5.76% Tm; 0.26%Ho and 1% Cr. A laser rod 1/4" diameter and 3" long was fabricated

| Laser Results: | |
|---|---|
| Operating temperature: | Room temperature |
| Operating wave length: | 2.13µ |
| Threshold : | 58 J |
| Slope Efficiency : | 1.2% |
| Power Output : | 0.82 J |

### Example 2

YAG:Tm:Cr 5%Tm; 1%Cr

A crystal 1.4" in diameter, 5" long was grown from the mixture:

| | |
|---|---|
| $Y_2O$ : | 561.70 gms |
| $Tm_2O_3$ : | 57.51 gms |
| $Cr_2O_3$ : | 2.65 gms |
| $Al_2O_3$ : | 443.16 gms |

with a composition 5% Tm, 1% Cr by Czochralski technique under conditions: 0.015"/hr pull rate;
15 Rpm rotation rate;
1000 ppm $O_2$ Atmosphere
and fabricated to a 1/4" diameter 3" long laser rod and heated.

| Laser test results: | |
|---|---|
| Operating temp : | Room |
| Operating wave length : | 2.02μ |
| Threshold : | 80 J |
| Slope Efficiency : | 0.83% |
| Power Output : | 0.5 J |

Example 3

YAG:Tm:Cr 1.5%Tm; 2%Cr

A crystal 1.4" in diameter, 5" long was grown from the mixture:

| | |
|---|---|
| $Y_2O_3$ : | 661.58 gms |
| $Tm_2O_3$ : | 17.22 gms |
| $Cr_2O_3$ : | 6.03 gms |
| $Al_2O_3$ : | 501.42 gms |

by Czochralski technique under the conditions: 0.015"/hr pull rate;
15 Rpm rotation rate;
1000 ppm $O_2$ Atmosphere
and fabricated to 1/4" diameter 3" long and tested.

| Laser test results: | |
|---|---|
| Operating temp : | Room |
| Operating wave length : | 2.02μ |
| Threshold : | 49.5 J |
| Slope Efficiency : | 0.6% |
| Power Output : | 0.43 J |

Example 4

YAG:Tm:Cr 30%Er; 0.3%Tm; 1%Cr

A crystal 1.4" in diameter, 6" long was grown from the mixture:

| | |
|---|---|
| $Y_2O_3$ : | 368.78 gms |
| $Tm_2O_3$ : | 3.01 gms |
| $Er_2O_3$ : | 269.05 gms |
| $Al_2O_3$ : | 396.78 gms |
| $Cr_2O_3$ : | 2.37 gms |

by Czochralski technique under conditions:0.015"/hr pull rate;
15 Rpm rotation rate;
1000 ppm $O_2$ Atmosphere ,
and fabricated into a laser rod 1/4" diameter 3" long and tested.

| Laser test results: | |
|---|---|
| Operating temp : | Room |
| Operating wave length : | 2.94µ |
| Threshold : | 23.5 J |
| Slope Efficiency : | 1.3% |
| Power Output : | 1.4 J |

Example 5

YAG:Er:Tm 30%Er; 0.5%Tm

A crystal 1.4" in diameter, 5" long was grown from the mixture:

| | |
|---|---|
| $Y_2O_3$ : | 369.63 gms |
| $Tm_2O_3$ : | 3.02 gms |
| $Er_2O_3$ : | 269.67 gms |
| $Al_2O_3$ : | 397.68 gms |

by Czochralski technique under conditions:0.015"/hr pull rate
15 Rpm rotation rate;
1000 ppm $O_2$ Atmosphere,
and fabricated into a laser rod 1/4" diameter 3" long and tested.

| Laser test results: | |
|---|---|
| Operating temp : | Room |
| Operating wave length : | 2.94µ |
| Threshold : | 25 J |
| Slope Efficiency : | 1.2% |
| Power Output : | 1.1 J |

Example 6

Gadolinium Scandium Gallium Garnet:Nd:Cr:Er 1/56%Nd; 1.2%Cr; 15%Er

A crystal 1.5" in diameter, 4.5" long was grown from the mixture:

| | |
|---|---|
| $Gd_2O_3$ : | 650.06 gms |
| $Er_2O_3$ : | 124.63 gms |
| $Nd_2O_3$ : | 18.00 gms |
| $Sc_2O_3$ : | 197.36 gms |
| $Cr_2O_3$ : | 2.64 gms |
| $Ga_2O_3$ : | 407.25 gms |

by Czochralski technique under conditions:0 015"/hr pull rate;
15 Rpm rotation rate;
1% $O_2$ Atmosphere
and fabricated into a laser rod 1/4" diameter 3" long, and tested.

| Laser test results: | |
|---|---|
| Operating temp : | Room |
| Operating wave length : | 1.06, 2.80, 2.83µ |
| Threshold : | 20 J for 1.06, 85 J for 2.8µ |
| Slope Efficiency : | 0.1% |
| Power Output : | 0.25 J combined |

**Claims**

1. A laser crystal having a garnet structure for generating at least one spectral emission between about 1.0 and 3 microns when flash lamp pumped at room temperatures comprising a host crystal and a plurality of dopants including chromium in a maximum concentration of no more than 2.0 atomic percent based on the octahedral sides of the garnet material structure and at least one other codopant selected from erbium, holmium and thulium.

2. A laser crystal as claimed in Claim 1 in which the host crystal material is one of yttrium aluminum garnet (YAG), yttrium scandium aluminum garnet (YSAG), gadolinium scandium aluminum garnet, gadolinium scandium gallium garnet (GSGG), lanthanum lutetium gallium garnet and yttrium aluminate.

3. A laser crystal as claimed in Claim 1 or Claim 2 wherein chromium is present between 0.05 and about 1.0 atomic percent based on the octahedral sides of the garnet structure.

4. A laser crystal as claimed in any one of the preceding claims in which the codopants comprise holmium and thulium.

5. A laser crystal as claimed in Claim 5 wherein the range of thulium lies between 0.1 and 15 atomic percent and holmium lies between 0.1 and 0.5 atomic percent based on the dodecahedral sides of the garnet structure.

6. A laser crystal as claimed in Claim 5 wherein holmium is present in a range from 0.1 to 0.5 atomic percent and thulium from 0.1 to 10 atomic percent based on the dodecahedral sides of the garnet structure.

7. A laser crystal as claimed in Claim 2 or Claim 3 in which the codopants comprise erbium from 5 to 80 atomic percent and thulium from 0.3 to 5 atomic percent based on the dodecahedral sides of the garnet structure.

8. A laser crystal as claimed in Claim 1 having a garnet structure for generating a spectral emission at 2.94 microns when flash lamp pumped at room temperatures comprising a host crystal and the codopants erbium and thulium with erbium in a concentration of from 5 to 80 atomic percent and thulium from 0.3 to 5 atomic percent based on the dodecahedral sides of the garnet structure.

9. A laser crystal as claimed in Claim 8 in which the host crystal material is one of yttrium aluminum garnet, (YAG), yttrium scandium aluminum garnet (YSAG), gadolinium scandium aluminum garnet, gadolinium scandium gallium garnet (GSGG), lanthanum lutetium gallium garnet and yttrium aluminate.

FIG. 1
1.45% slope efficiency
.83% slope efficiency
1% Cr
2.5%Cr
Watts out
Watt in
0
2
4
6
8
10
12
0
200
400
600
800
1000
1200
1400
2Hz
2Hz
4Hz
4Hz
6Hz
8Hz
6Hz
8Hz

FIG. 2A

FIG. 2B